(19)

Europäisches Patentamt

European Patent Office

Office européen des brevets

(11) **EP 4 369 650 A1**

(12) **EUROPEAN PATENT APPLICATION**

(43) Date of publication:
**15.05.2024 Bulletin 2024/20**

(21) Application number: **23165719.8**

(22) Date of filing: **30.03.2023**

(51) International Patent Classification (IPC):
**H04L 9/08** (2006.01)   **H04B 10/2507** (2013.01)
**H04B 10/25** (2013.01)   **H04B 10/29** (2013.01)

(52) Cooperative Patent Classification (CPC):
**H04L 9/0855; H04B 10/2507; H04B 10/2589;
H04B 10/29**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **10.11.2022 EP 22206735**

(71) Applicant: **Terra Quantum AG
9000 St. Gallen (CH)**

(72) Inventors:
• **Vyatkin, Mikhail
9000 St. Gallen (CH)**
• **Zhdanova, Ekaterina
9000 St. Gallen (CH)**

• **Gutor, Alexander
9000 St. Gallen (CH)**
• **Lesovik, Gordey
9000 St. Gallen (CH)**
• **Kirsanov, Nikita
9000 St. Gallen (CH)**
• **Yarovikov, Mikhail
9000 St. Gallen (CH)**
• **Smirnov, Alexander
9000 St. Gallen (CH)**
• **Bezruchenko, Alexander
9000 St. Gallen (CH)**

(74) Representative: **Kretschmann, Dennis
Boehmert & Boehmert
Anwaltspartnerschaft mbB
Pettenkoferstrasse 22
80336 München (DE)**

(54) **METHOD AND SYSTEM FOR OPTICAL SIGNAL AMPLIFICATION**

(57)    The present disclosure refers to a method for optical signal amplification, the method being implementable in a system which comprises: a transmission line (10) for transmitting optical signals between a first data processing device (11) and a second data processing device (12); and an optical amplifier (14) disposed at the transmission line (10), the optical amplifier (14) comprising an active fiber section (15) and a pumping device (16). The method comprises: determining a target operating gain of the optical amplifier (14); determining a target maximum gain of the optical amplifier (14); determining an active fiber section length such that the optical signals are amplified with at most the target maximum gain; determining a core cross-sectional area size of the active fiber section (15) based on a maximum allowable pulse shape distortion and a target maximum energy per pulse such that high-energy pulses with the target maximum energy per pulse are distorted by at most the maximum allowable pulse shape distortion; and determining an operating pumping power of the pumping device (16) below the maximum pumping power such that the optical signals are amplified with the target operating gain. Further, a system for optical signal amplification is disclosed.

Fig. 1

**Description**

Technical Field

The present disclosure refers to a method for optical signal amplification (and transmission), specifically for quantum key distribution. Further, a system for optical signal amplification (and transmission), specifically for quantum key distribution is disclosed.

Background

Optical signals in optical fiber line decay gradually. It is necessary to use optical amplifiers in optical transmission systems to transmit optical signals over long distances. Any possibility of imperceptible signal diversion leads to insecure data transmission by optical signals.

Standard amplifiers are usually configured to maximize the efficiency of pump power to signal power conversion by implementing a high pump absorption coefficient. In such a regime, the amplifier has a high gain sensitivity to the pump increase. This leads to the possibility for an intruder to divert an excess signal after additional pumping while remaining unnoticed.

Additionally, standard amplifiers comprise components such as optical isolators and couplers that divert signals from the main channel to ensure and control stable operation. Using such components may lead to significant signal losses, which may be unacceptable for secure data transmission. Security requirements become even more critical for quantum signal transmission and quantum key distribution.

In document US 2015 / 043 056 A1, a communication system for quantum key distribution and a method of generating light are disclosed. The method comprises: directing an optical pulse to a semiconductor optical amplifier being at a temperature above 0° C. The optical pulse comprises a wavelength within an emission spectrum of the semiconductor optical amplifier and a pulse area selected to induce Rabi oscillations in the semiconductor optical amplifier and to emit light at a frequency of at least 1 THz.

Document US 11 417 998 B2 pertains to a gain fiber assembly for optical fiber amplification systems such as fiber amplifiers and fiber lasers. The gain fiber assembly utilizes an active fiber that has a single glass cladding with an outer diameter of less than 80 $\mu$m. A passive double-clad input fiber is stripped of the outer cladding and tapered to match the outer diameter of the bare fiber. A glass-fluid or glass-vacuum interface along the taper provides guidance of the pump into and along the cladding of the bare fiber and a NA>1 for a vacuum or gasses and an NA>0.8 for liquids. This may allow for much shorter fiber lengths to reach maximum signal power and higher pump conversion efficiencies.

In document EP 2 535 989 A2, a large area active double clad optical waveguide is described which is doped in the central core region with $Nd^{3+}$ at a concentration of at least 0.1 % by weight and which can be used to amplify light at a wavelength of between 1050 nm and 1120 nm. At a doping concentration sufficient to provide a net optical absorption of at least 3 dB/m for the pump light at certain wavelengths, $Nd^{3+}$ operates under much lower inversion levels than $Yb^{3+}$. Due to the lower inversion levels, the $Nd^{3+}$ doped waveguide is subject to reduced pump bleaching or photodarkening. The pump light is guided by the second cladding and the signal light to be amplified is guided by the first cladding with a very large mode area of at least 500 square micrometers.

Document CN 115 189 212 A discloses a coherent array fiber laser structure, including a plurality of pump light sources, a fiber combiner, a high inverse grating, an active fiber, a low inverse grating, a passive dielectric layer, a transmission-enhancing film, a mode selection layer and a reflection layer, which are arranged sequentially along the optical path. The high inverse grating, the active fiber, and the low inverse grating form a first resonant cavity. The first resonant cavity, the passive dielectric layer, the transmission-enhancing film, the mode selection layer, and the reflection layer form a second resonant cavity. The active fiber absorbs the pump light and generates laser light incident to the passive media layer. Through the passive media layer and the mode selective layer, the mode selection and external cavity feedback of the output laser are performed to obtain efficient injection locking and homogeneous mode output, thus improving the injection feedback and mode locking capability and realizing homogeneous mode coherent array fiber laser output.

In document US 2003 / 197 921 A1, phosphate glass fibers are disclosed which can be co-doped with high concentrations of Ytterbium and Erbium and exhibit a high optical gain per unit length. By avoiding alkali metal oxides in the glass composition and by adjusting the concentration of the network modifiers such as BaO, a phosphate glass composition that exhibits a temperature coefficient of refractive index close to zero is provided. Thus, high absorption of the pumping radiation and heating effects caused by the pump laser can be avoided.

Summary

It is an object of the present disclosure to provide improved techniques for transmitting data via optical signals, in particular with respect to optical amplification of optical signals.

For solving the problem, a method and a system for optical signal amplification are provided according to the independent claims. Further embodiments are disclosed in dependent claims.

According to one aspect, a method for optical signal amplification is provided. The method is implementable in a system which comprises a transmission line for transmitting optical signals (optical pulses) between a first data processing device and a second data processing device and an optical amplifier disposed at the transmission line, the optical amplifier comprising an active fiber section and a pumping device. The method comprises: determining a target operating gain of the optical amplifier; determining a target maximum gain of the optical amplifier; determining an active fiber section length such that the optical signals are amplified with at most the target maximum gain; determining a core cross-sectional area size of the active fiber section based on a maximum allowable pulse shape distortion and a target maximum energy per pulse such that high-energy pulses with the target maximum energy per pulse are distorted by at most the maximum allowable pulse shape distortion; and determining an operating pumping power of the pumping device below the maximum pumping power such that the optical signals are amplified with the target operating gain.

According to another aspect, a system for optical signal amplification is provided, the system comprising a transmission line for transmitting optical signals between a first data processing device and a second data processing device, and an optical amplifier disposed at the transmission line with an active fiber section and a pumping device. The system has been configured according to the method for optical signal amplification.

As a result, when increasing the pumping power beyond the operating pumping power, e.g., by an eavesdropper, it may be ensured that the amount of leaked/diverted optical signals/pulses is limited. Thus, the potential information gain by the eavesdropper may be restricted. At the same time, low-energy and high-energy pulses may be equally amplified and pulse shape distortion may be prevented or mitigated, thus decreasing errors and improving control when monitoring the transmission line. Hence, security for quantum key distribution may be improved.

The method may additionally pertain to quantum key distribution. In particular, the method may further comprise determining a shared key between the first data processing device and the second data processing device by quantum key distribution comprising amplifying the optical signals via the optical amplifier by operating the pumping device at the operating pumping power.

The target maximum gain may be determined from the target operating gain and a gain increase value determined from an optical signal leakage, preferably from a minimum detectable optical signal leakage. The method may comprise determining the (minimum detectable) optical signal leakage. The gain increase value may be an (additive) gain increment or a gain increase factor. The gain increase value may correspond to a gain increase when operating the pumping device at the operating pumping power versus operating the pumping at device at maximum pumping power. The gain increase value may be correspondingly verified.

The ratio $G_{max}/G_{op}$ between the target maximum gain $G_{max}$ and the target operating gain $G_{op}$ may be determined from an optical signal leakage, preferably from a minimum detectable optical signal leakage $r_E^{min}$. The ratio $G_{max}/G_{op}$ between the target maximum gain $G_{max}$ and the target operating gain $G_{op}$ may be between $1 + 10^{-7}$ and $1 + 10^{-1}$, preferably between $1 + 10^{-6}$ and $1 + 10^{-2}$, more preferably between $1 + 10^{-5}$ and $1 + 10^{-3}$.

The difference between the target maximum gain $G_{max}$ and the target operating gain $G_{op}$ may be equal to the minimum detectable optical signal leakage $r_E^{min}$ (times the target operating gain $G_{op}$). The minimum detectable optical signal leakage $r_E^{min}$ may depend on the transmission line length. For a distance between neighboring optical amplifiers (amplifier interval) of 50 km and a transmission line length of 1000 km-line difference between the target maximum gain $G_{max}$ and the target operating gain $G_{op}$ may be equal to $10^{-6}$; for a transmission line length of 40 000 km equal to $10^{-5}$. The pumping device may thus regularly operate closely to the maximum possible gain of the pumping device. This may restrict the possibilities of an eavesdropper to increase the pumping power and partially divert optical signals.

The target operating gain may be between 3 and 100, preferably between 5 and 20, more preferably between 9 and 11. The maximum operating gain may be between $3 + 10^{-6}$ and $100 + 10^{-3}$, preferably between $5 + 10^{-6}$ and $20 + 10^{-3}$, more preferably between $9+10^{-6}$ and $11 + 10^{-3}$.

The operating pumping power may be dependent on the determined core cross-sectional area size of the active fiber section. For example, an increased core cross-sectional area size may correspond to an increased pumping power in order to achieve similar population inversion levels. Determining the operating pumping power may comprise comparing the optical pulses before and after amplification by the optical amplifier and/or adjusting the operating pumping power based on the comparison result.

The target maximum gain may be determined as a sum of the target operating gain and the gain increment and/or as a product of the target operating gain and the gain increase factor.

For example, the target maximum gain $G_{max}$ may be determined from the target operating gain $G_{op}$ and the gain increase value (gain increment $\Delta G$ or gain increase factor $\delta G$) as $G_{max} = G_{op} + \Delta G$ or $G_{max} = G_{op} \cdot \delta G$. It is noted that both formulas may coincide when rescaling the gain from linear units to logarithmic units or vice versa. The target maximum gain may, e.g., also be determined via a gain increase exponent applied to the target operating gain.

The target maximum gain may correspond to the gain of the optical amplifier when operating the pumping device at maximum pumping power. The maximum pumping power may correspond to at least one of a maximum achievable pumping power by the pumping device, a pumping power above which components of the optical amplifier deteriorate (above a predetermined threshold), and a pumping power above which non-linear optical effects appear in the transmission line (above a further predetermined threshold). The target maximum gain may also correspond to a total population inversion in the active fiber section (which may be calculated and/or measured). The method may comprise determining the maximum pumping power corresponding to the maximum target gain. The eavesdropper may want to couple another pumping device to the active fiber section, but this may be easier to detect than only the eavesdropper accessing the existing pumping device, increasing its pumping power, and partially diverting optical pulses.

The target operating gain may be determined from a signal decay / signal attenuation of the optical pulses along the transmission line / optical fiber and/or a position of the optical amplifier at the transmission line.

The target maximum signal power may be determined from at least one of a maximum signal intensity of the optical pulses, a maximum photon number (per pulse) of the optical pulses, a (minimum) pulse duration of the optical pulses, and a (maximum) signal frequency (or (minimum) signal wavelength) of the optical pulses. The signal pulse duration $t_s$ may, e.g., be between 0.1 ns and 1 $\mu$s. The signal wavelength $\lambda_s$ may for example be between 300 nm and 2500 nm. The target maximum signal power may be a maximum average signal power. The maximum average signal power may be determined as a signal power averaged over time (e.g., for one or more optical pulses).

The target maximum gain may be achieved by, e.g., adjusting the length of the active fiber section (active fiber section length). The active fiber section length may be determined such that the optical pulses with any target signal power are amplified with at most the target maximum gain for any additional pumping power (for achieved level of population inversion close to one). The length of the active fiber may, e.g., be adjusted and a gain be determined in an iterative way until the target maximum gain is achieved.

In particular, determining the active fiber section length may comprise at least one of providing the active fiber section with an initial length; operating the pumping device at maximum pumping power; iteratively determining a gain value and adjusting the length of the active fiber section until the gain value is equal to the target maximum gain; and setting the active fiber section length as the length of the active fiber section for which the gain value is equal to the target maximum gain. The initial length may be greater than an initial estimate of the active fiber section length, for example by a factor between 1 % and 20 %, preferably between 5% and 15 %, more preferably between 9 % and 11 %. The maximum pumping power may be a maximum achievable pumping power by the pumping device. The maximum pumping power may thus depend on the pumping device.

Adjusting the length of the active fiber section may comprise shortening and/or extending the active fiber section. The gain value may for example be determined from an input signal intensity (and/or photon number per pulse and/or signal power) to the optical amplifier and an output signal intensity (and/or photon number per pulse and/or signal power) from the optical amplifier.

The optical signal leakage may be determined via the transmission line. The optical signal leakage may be associated with the transmission line.

The optical signal leakage may be maximum allowable signal leakage determined by, e.g., a quantum key distribution protocol. In particular, the optical signal leakage may correspond to a maximum (allowed) number of divertable photons (per pulse and/or per time unit), i.e., a maximum number of photons that may be diverted/leaked, e.g., by the eavesdropper (while the undiverted optical pulses may still be amplified not below the target operating gain). The maximum optical signal leakage may also correspond to at least one of a maximum signal intensity, a maximum energy (per pulse) that may be diverted, a maximum signal power that may be diverted, a ratio of divertable signal intensity and undiverted signal intensity, and a ratio of a divertable photon number and an undiverted photon number. For example, the eavesdropper may operate the optical amplifier at a gain above the target operating gain up to the target maximum gain, e.g., by operating the pumping device at a pumping power above the operating pumping power up to a maximum pumping power. However, even when operating the optical amplifier at the target maximum gain, the optical signal leakage and particularly the maximum number of divertable photons may be limited.

The optical signal leakage may be determined by monitoring a method accuracy and/or resolution. In particular, the optical signal leakage may correspond to minimum fraction of photon number (per pulse and/or per time unit) and/or signal power and/or signal intensity which can be detected by monitoring technique and/or equipment.

Determining the core cross-sectional area size (core profile size, size of the cross-sectional area of the fiber core) of the active fiber section may comprise determining at least one of a core diameter, a core radius, and a core circumference of the (fiber core of the) active fiber section.

The core cross-sectional area (size), and in particular the core diameter may be constant along the active fiber section. Alternatively, the core diameter may be an average core diameter or a maximum core diameter of the active fiber section.

The fiber core of the active fiber section may generally comprise a circular cross section. Non-circular cross sections (e.g., elliptical) could also be provided.

The core cross-sectional area size may be determined via a pulse shape metric (indicative of a pulse shape distortion of the high-energy pulses). In particular, the determining of the core cross-sectional area size of the active fiber section may comprise at least one of: transmitting the high-energy pulses with the target maximum energy per pulse via the active fiber section; determining the pulse shape metric indicative of the pulse shape distortion of the high-energy pulses, comparing the pulse shape metric value with the maximum allowable pulse shape distortion, and adjusting the core cross-sectional area size based on the comparison result.

The determining of the core cross-sectional area size may in particular comprise iteratively carrying out the above steps until the pulse shape metric is smaller than the maximum allowable pulse shape distortion, and preferably, greater than the maximum allowable pulse shape distortion minus a threshold value.

The target maximum energy per pulse may, e.g., be from 1 $\mu$J to 10 $\mu$J, preferably from 3 $\mu$J to 5 $\mu$J. The high-energy pulse duration may, e.g., be from 0.1 ns to 20 $\mu$s, preferably form 3 ns to 20 $\mu$s. The high-energy pulse peak power may be from 10 mW to 300 mW, preferably from 100 mW to 200 mW.

The high-energy pulses may, e.g., be test pulses for determining optical signal losses. It may be provided that the optical pulses comprise an energy per pulse equal to or less than the target maximum energy per pulse.

The determining of the pulse shape metric may comprise determining a first form factor $s_{in}(t)$ of an optical pulse before amplification and a second form factor $s_{out}(t)$ of the optical pulse after amplification (amplified optical pulse). The first form factor $s_{in}(t)$ may be determined by normalizing a pulse shape $S_{in}(t)$ of the optical pulse before amplification (for example, such that its time integral from the beginning of the pulse to the end of the pulse is one). The second form factor $s_{out}(t)$ may be determined by normalizing a pulse shape $S_{out}(t)$ of the amplified optical pulse (for example, such that its time integral from the beginning of the pulse to the end of the pulse is one). For example, the first form factor $s_{in}(t)$ and/or the second form factor $s_{out}(t)$ may respectively be determined as

$$s_{\text{in}}(t) = \frac{S_{\text{in}}(t)}{\int_{t_1}^{t_2} S_{\text{in}}(t)dt} \quad \text{and/or} \quad s_{\text{out}}(t) = \frac{S_{\text{out}}(t)}{\int_{t_1}^{t_2} S_{\text{out}}(t)dt}, \tag{1}$$

wherein $t_1$ and $t_2$ denote the times of the beginning of the pulse and the end of the pulse, respectively. Each optical pulse may comprise one or a plurality of pulses.

The pulse shape $S_{in}(t)$ of the optical pulse before amplification and/or the pulse shape $S_{out}(t)$ of the amplified optical pulse may, e.g., be determined using a photodetector or an oscilloscope.

The pulse shape metric may be determined as a root mean square value of the first form factor $s_{in}(t)$ and the second form factor $s_{out}(t)$, in particular as

$$D_{\text{exp}} = \sqrt{\int_{t_1}^{t_2} \left(s_{\text{in}}(t) - s_{\text{out}}(t)\right)^2 \, \mathrm{d}t}, \tag{2}$$

wherein $t_1$ and $t_2$ denote the times of the beginning of the pulse and the end of the pulse respectively.

Alternatively, the pulse shape metric may be determined as the difference of the ratio of the first form factor at the beginning of the pulse and at the end of the pulse and the ratio of the second form factor at the beginning of the pulse and at the end of the pulse, in particular as

$$D_{\text{exp}} = \frac{s_{\text{in}}(t_1)}{s_{\text{in}}(t_2)} - \frac{s_{\text{out}}(t_1)}{s_{\text{out}}(t_2)}. \tag{3}$$

Adjusting the core cross-sectional area size may comprise increasing the core cross-sectional area size (in particular increasing one of the core diameter, the core radius, and the core circumference) based on determining that the pulse shape metric is greater than the maximum allowable pulse shape distortion. In case the pulse shape metric is greater than the maximum allowable pulse shape distortion, it may be determined that insufficient energy has been accumulated in the active fiber section to amplify the pulses.

By adjusting the core cross section, pulse shape distortion may be prevented or mitigated. Thus errors, e.g.,

when monitoring the transmission line, may be decreased and control of the transmission line may be improved.

The method may comprise repeatedly monitoring pulse shape distortion, for example at regular time intervals, e.g., with an interval length from 1 $\mu$s to 10 s. Monitoring the pulse shape distortion may for example comprise determining the pulse shape metric or determining a bit error rate (BER) of the pulse before and after amplification. The method may further comprise determining whether the pulse shape distortion is appropriate based on a difference of the bit error rate before and after amplification being greater than a predetermined threshold value.

The allowable pulse shape distortion may, e.g., be from 0 to 0.1, preferably from 0 to 0.01, or be from 0.9 to 1, preferably from 0.99 to 1.

The method may further comprise determining (and/or monitoring) optical signal losses (e.g., intensity losses and/or photon number losses of the optical pulses) along the transmission line, preferably optical signal losses depending on a position along the transmission line. In other words, the optical signal losses may be determined as a function of the position along the transmission line. In particular, for each position along the transmission line, corresponding optical signal losses may be determined. The optical signal losses may thus correspond to a signal loss profile.

The optical signal losses may be determined by optical time-domain reflectometry. The optical signal losses may be determined during and/or prior to and/or subsequent to determining the shared key. The optical signal losses may be determined repeatedly. For example, the optical signal losses may be determined repeatedly within a time interval from 10 ns to 50 s, preferably from 10 ns to 10 s, in particular from one of 100 ns to 100 ms, 500 ns to 500 ms, 100 ms to 1000 ms, 0.5 s to 5 s, and 5 s to 10 s.

The method may comprise determining an intrusion event based on the optical signal losses and/or aborting (terminating) determining of the shared key based on the optical signal losses. The method may comprise discarding the shared key based on the optical signal losses.

The optical signals (pulses) may comprise test pulses for determining the optical signal losses and key distribution pulses for determining the shared key, wherein the test pulses comprise a higher energy per pulse than the key distribution pulses. In particular, each of the test pulses may comprise a higher energy than each of the key distribution pulses. Alternatively, the test pulses and the key distribution pulses may comprise the same range of energy per pulse.

The test pulses and the key distribution pulses may be separated in time (time multiplexing) or by different frequency channels (wavelength-division multiplexing, WDM).

The maximum energy per test pulse may, e.g., be from 1 $\mu$J to 10 $\mu$J, preferably from 3 $\mu$J to 5 $\mu$J. The test pulse duration may, e.g., be from 0.1 ns to 20 $\mu$s, preferably form 3 ns to 20 $\mu$s. The test pulse peak power may be from 10 mW to 300 mW, preferably from 100 mW to 200 mW.

The maximum photon number per key distribution pulse may, e.g., be from 2000 to 10000 photons, preferably from 2500 photons to 3500 photons.

The maximum energy per key distribution pulse may, e.g., be from 2.56 e-16 J to 1.28 e-15 J, preferably from 3.20 e-16 J to 4.5 e-16 J. The key distribution pulse duration may, e.g., be from 0.01 ns to 100 ns, preferably from 0.1 ns to 10 ns. The key distribution pulse peak power may be from 2.5 nW to 12.8 $\mu$W, preferably from 60 nW to 500 nW.

The method may further comprise providing the transmission line with a physically unclonable structure, thus preferably providing an irreproducible profile. For example, the transmission line may comprise (active and/or non-active) fiber core sections which are doped, e.g., with at least one of Al, P, N, and Ge, preferably with a dopant concentration from 0.5 mol-% to 5.0 mol-%, more preferably from 1.0 mol-% to 3.0 mol-%. The dopant concentration may vary depending on the position at the transmission line, thus preferably providing a unique dopant pattern. Such a pattern may allow for authenticating the transmission line and more accurately monitor signal leakage. As a result, security may be improved.

The method may further comprise providing the active fiber section with at least one of an Erbium-doped fiber section, a thulium-doped fiber section, a neodymium-doped fiber section, and an ytterbium-doped fiber section.

The method may further comprise providing the transmission line free of an optical isolator and free of a tap coupler. In principle, the transmission line may be free of any optical component with losses exceeding a maximum allowable threshold.

The method may further comprise providing the optical amplifier as a bidirectional optical amplifier. As a result, optical pulses may be transmitted via the same optical fiber from the first data processing device to the second data processing device and from the second data processing device to the first data processing device.

The method may further comprise disposing a plurality of optical amplifiers at the transmission line, each comprising a (further) pumping device and a (further) active fiber section having the active fiber section length. Preferably, determining the shared key may comprise amplifying the optical signals via the plurality of optical amplifiers by operating each further pumping device at the operating pumping power. The method may further comprise disposing the plurality of optical amplifiers with an optical amplifier distance between two adjacent optical amplifiers between 30 km and 200 km, preferably between 30 km and 60 km.

A pumping wavelength of pumping radiation emitted from the pumping device may be adjusted to be less than 10 nm, preferably less than 1 nm, more preferably less than 0.1 nm apart from a peak wavelength of the absorption spectrum of the active fiber section. This way, the active medium inversion may be maximized and the achievable difference between target maximum gain and target operating gain may be minimized.

Additionally or alternatively, the pumping wavelength of the pumping radiation emitted from the pumping device may be stabilized, preferably by controlling temperature and/or electric power supply of the pumping device. The temperature may be controlled to vary by less than 0.1 °C, preferably less than 0.01 °C. The electric power supply may be controlled to vary by less than 1 %, preferably less than 0.1 %, more preferably less than 0.01 %. Thus, a stable operating gain coefficient may be achieved.

The active fiber section may be part of the transmission line. The active fiber section may be connected to the optical fiber (sections) of the transmission line, e.g., via spliced connections. The pumping device may be coupled with the transmission line, in particular the active fiber section, via a supply (optical) fiber and/or a coupling element. In particular, the pumping radiation emitted from the pumping device may pass the supply fiber and/or may (subsequently) be fed into the transmission line via the coupling element. The coupling element may be configured to guide radiation with different wavelengths and/or from different optical fibers into a single optical fiber. The coupling element may for example be a wavelength-division multiplexing (WDM) system/element. The supply fiber may be a passive fiber.

The pumping device comprise a diode and/or a laser. The pumping device may be configured to emit radiation at a pumping wavelength of the active fiber section. The system may or may not comprise the first and the second data processing device and/or a further data processing device. The method may be carried out in a data processing device, for example in the first, the second, and/or the further data processing device. Determining the target maximum gain and/or determining the active fiber section length and/or determining the core cross-sectional area size of the active fiber section and/or determining the operating pumping power may or may not be carried out (at least partially) in a data processing device such as the first, the second, and/or the further data processing device. The first, the second, and/or the further data processing device may be connected to the optical amplifier, in particular to the pumping device. The optical pulses may be emitted from the first and/or second data processing device.

Determining the shared key may comprise at least one of determining, using a random number generator, a bit sequence in the first data processing device; encoding the bit sequence into optical pulses (in particular, the key distribution pulses); transmitting the optical pulses to the second data processing device via the transmission line; amplifying the optical pulses by the optical amplifier with operating pumping power; receiving and measuring the optical pulses by the second data processing device; discarding inconclusive signal bits from the (received) bit sequence in the first and/or second data processing device; disclosing, by the first and/or second data processing device, a part of the bit sequence and/or the received bit sequence via a classical channel and carrying out error correction on the bit sequence and the received bit sequence; and determining an amplified key sequence corresponding to the shared key from the error corrected bit sequence using privacy amplification.

The aforementioned embodiments related to the method for optical amplification can be provided correspondingly for the system for optical amplification.

## Brief Description of the Drawings

In the following, embodiments, by way of example, are described with reference to the Figures, in which:

Fig. 1    shows a graphical representation of an arrangement with a system for optical amplification and an eavesdropping device.

Fig. 2    shows an energy diagram illustrating light amplification in an Erbium-doped fiber section.

Fig. 3    shows a graphical representation of a method for quantum key distribution.

Fig. 4    shows a graphical representation of (sub-)steps for determining a shared key by quantum key distribution.

Fig. 5    shows an exemplary reflectogram resulting from optical time-domain reflectometry corresponding to a signal loss profile.

## Description of embodiments

### (a) System for quantum key distribution

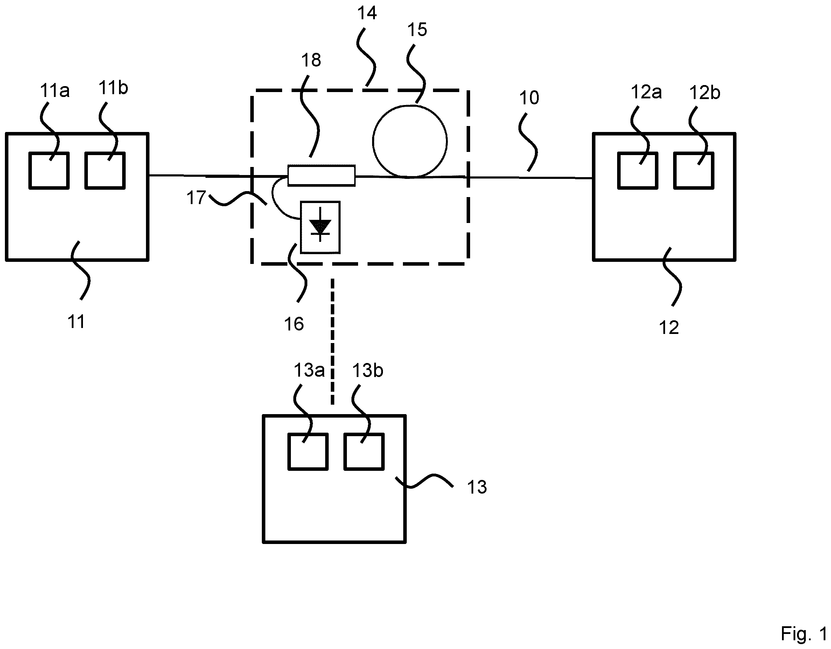

In Fig. 1, a graphical representation of an arrangement with a system for quantum key distribution and an additional eavesdropping device 13 ("*Eve*") is shown. The system comprises a transmission line 10 with an optical fiber for transmitting optical pulses, in particular classical signals and/or quantum signals, between a first data processing device 11 ("*Alice*") and a second data processing device 12 ("*Bob*").

The first data processing device 11 may comprise a first processor 11a and a first memory 11b and the second data processing device 12 may comprise a second processor 12a and a second memory 12b. The first and the second data processing device 11, 12 may or may not be part of the system. The first data processing device 11 and the second data processing device 12 are connected to the transmission line 10. The transmission line 10 may comprise a quantum channel configured to convey the quantum signals. Further, a classical channel configured to convey the classical signals may be provided. The classical channel may be provided within the transmission line 10 or separately.

The system may comprise a plurality of further data processing devices, in particular, a third data processing device with a third processor and a third memory (not shown). The third data processing device may be connected to the transmission line 10. The third data processing device can exchange the classical signals and/or the quantum signals with the first data processing device 11 and/or the second data processing device 12 via further communication channels. In case the system is configured to carry out a step, such a step may for example be carried out in at least one of the first data processing device 11, the second data processing device 12, and the third data processing device.

The eavesdropping device 13 with an eavesdropping processor 13a and an eavesdropping memory 13b represents a device outside the system with potential access to the transmission line 10. The eavesdropping device 13 may be arranged at the transmission line 10 such that the optical pulses transmitted via the transmission line 10 are at least partially received and/or retransmitted by the eavesdropping device 13. The eavesdropping device 13 may also access the further communication channels.

The first memory 11b, the second memory 12b, the third memory, and the eavesdropping memory 13b may each comprise a quantum memory that is configured to store the quantum signals and a classical memory that is configured to store the classical signals. The quantum memory may be provided using optical delay lines, controlled reversible inhomogeneous broadening (CRIB), a Duan-Lukin-Cirac-Zoller (DLCZ) scheme, revival of silenced echo (ROSE), and/or hybrid photon echo rephasing (HYPER).

The first data processing device 11, the second data processing device 12, the third data processing device, and the eavesdropping processing device 13 may each comprise means to transmit and/or to receive quantum states via optical pulses.

(b) <u>Optical amplification</u>

The optical pulses are amplified / repeated by optical amplification via stimulated emission in order to compensate for signal decay. To this end, an optical amplifier 14 with an active fiber section 15 and a pumping device 16 is provided/disposed/arranged at the transmission line 10. In addition, a plurality of optical amplifiers 14 may be provided at the transmission line 10. The optical amplifiers 14 may for example be disposed equidistantly along the transmission line 10, for example with an amplifier interval between 30 km and 200 km, preferably between 30 km and 100 km, more preferably between 30 km and 60 km. By increasing the amplifier interval, cross-talk between individual optical amplifiers 14 may be mitigated or prevented. The distance between any of the optical amplifiers 14 and any of the first and second data processing devices 11, 12 may also be at least 30 km.

The optical amplification takes place in the active fiber (section) 15 of the optical amplifier 14. The active fiber section 15 may for example be an Erbium ($Er^{3+}$)-doped fiber that is pumped via the pumping device 16, a supply fiber 17, and a coupling element 18 at a pumping wavelength of 980 nm and that allows for an amplified signal wavelength at around 1530 nm. Additionally or alternatively, Thulium-doped fibers (to be pumped at 1450 nm to 1550 nm), Neodymium-doped fibers (to be pumped at 800 nm to 930 nm), or Ytterbium-doped fibers (to be pumped at 915 nm to 980 nm) may be employed. Employing Erbium-doped fibers is beneficial in that the amplified signal wavelength fits well into the transmission window of standard silica fibers.

The pumping device 16 may for example be a diode or a laser, which is in particular configured to emit radiation with the pumping wavelength. The coupling element 18 element is a beam splitter-like device for guiding radiation of different wavelengths into a single optical fiber and is connected to the active fiber section 15 and the pumping device 16. The coupling element 18 may for example be a wavelength-division multiplexing (WDM) element. To minimize unwanted local fiber connections losses, all fiber connections (e.g., between the active fiber section(s) and the passive fiber sections of the transmission line) may be spliced.

Unlike standard optical amplifier setups, the system does not comprise optical isolators or tap couplers. Isolators are configured to allow light to pass only in one direction and are typically used to minimize the risk of multiple reflections inside the active fiber section 15 which could result in the optical amplifier 14 essentially becoming a laser. Tap couplers typically divert about 1 % of the optical pulses to photodetectors in order to monitor the optical amplifier 14 (in particular, input and output powers, operational modes and gain coefficients). This fraction may possibly be seized by the eavesdropper. Splices between different sections of the transmission line may be optimized for mitigating back reflections and avoiding lasing in the active fiber sections 15.

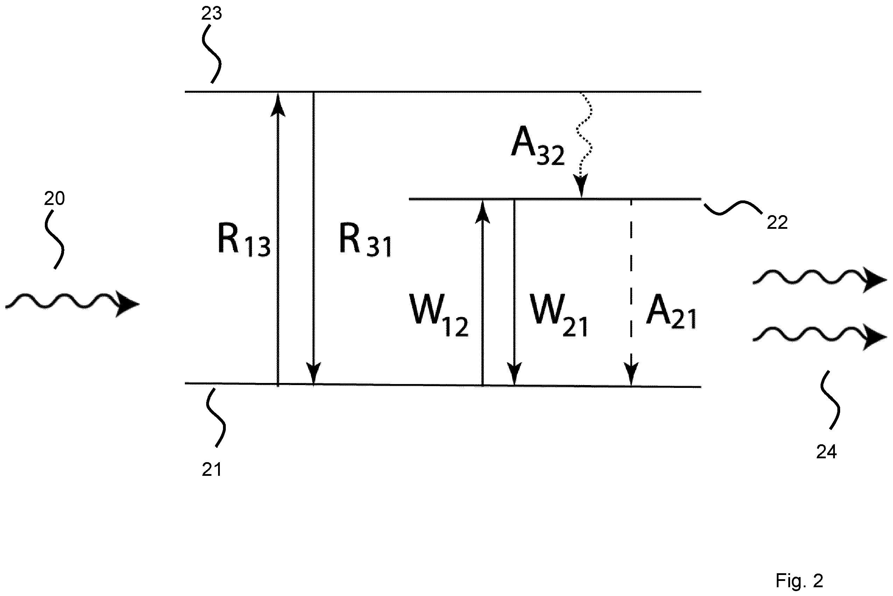

In Fig. 2, an energy diagram illustrating light amplification in an Erbium-doped fiber section 15 is shown. Pumping radiation 20 with pumping wavelength of, e.g., 980 nm emitted from the pumping device 16 is absorbed in the Erbium-doped fiber section (with pump absorption rate $R_{13}$), so that Erbium ions transit from a first (ground) level 21 ($^4I_{15/2}$) to a (short-lived) third level 23 ($^4I_{11/2}$) with relaxation time $\tau_{32} \approx 20\ \mu s$. From the third level 23, the Erbium ions non-radiatively relax to a (metastable) second level 22 ($^4I_{13/2}$) with longer relaxation time $\tau_{21} \approx 10$ ms.

Optical pulses passing the erbium-doped fiber section result in a stimulated transition from the second level 22 to the first level 21 together with a coherently synchronized emission of additional photons 24 as part of the optical pulses (with $W_{21}$ being the rate of stimulated signal emission). The magnitude of the resulting signal amplification depends on the concentration of the Erbium ions, the length of the active fiber section 15 and the power of the pumping radiation.

The population dynamics in the second level 22 may be described by the equation

$$\frac{dn_2}{dt} = -W_{21}n_2 + W_{12}n_1 - A_{21}n_2, \tag{4}$$

wherein $n_1$ denotes the relative population of the first level 21 and $W_{12}$ denotes the rate of stimulated signal absorption. The rates of spontaneous transitions from the second level 22 to the first level 21 ($A_{21}$) and from the third level 23 to the second level 22 ($A_{32}$) depend on the properties of the active medium. The rate $A_{32} = 1/\tau_{32}$ is large compared to the rate $A_{21} = 1/\tau_{21}$ and the population of the third level may thus be neglected for certain considerations. The population of the second level 22 is then determined mainly by the ratio of the pump and signal rates (which are determined by pumping power and signal power when the other parameters are fixed). When increasing the signal power, the rate of stimulated emission $W_{21}$ may become greater than the ion ejection rate to the upper level $R_{13}$ due to pumping and the inversion level begins to decrease.

The pump absorption and emission rates $R_{13}$, $R_{31}$ depend on the pumping power and the signal absorption and emission rates $W_{12}$, $W_{21}$ depend on the signal power. In particular,

$$W_{21}(r,z) = \frac{\sigma_e(v_s)}{hv_s\pi\omega_s^2}P_s(z)\psi_s(r)$$

$$W_{12}(r,z) = \frac{\sigma_a(v_s)}{hv_s\pi\omega_s^2}P_s(z)\psi_s(r)$$

$$R_{13}(r,z) = \frac{\sigma_a(v_p)}{hv_p\pi\omega_p^2}P_p(z)\psi_p(r)$$

$$R_{31}(r,z) = \frac{\sigma_e(v_p)}{hv_p\pi\omega_p^2}P_p(z)\psi_p(r) \tag{5}$$

with signal power $P_s$, absorption cross sections $\sigma_a(v_s)$, $\sigma_a(v_p)$, luminescence cross sections $\sigma_e(v_s)$, $\sigma_e(v_p)$, pumping frequency $v_p$, signal frequency $v_s$, mode spot sizes $\omega_s$, $\omega_p$, and envelopes of the pumping / signal mode $\psi_p$, $\psi_s$.

The gain may approximately correspond to

$$G = \exp\left(\Gamma\sigma_a(v_s)\rho\left((\eta_s + 1)n_{2,i} - 1\right)L\right), \tag{6}$$

wherein $\Gamma$ is an overlapping factor between the signal mode and the active medium, $\sigma_a(v_s)$ is the absorption cross section at the signal frequency $v_s$, $\rho$ is the concentration of active ions, $\eta_s = \sigma_e(v_s)/\sigma_a(v_s)$, $n_{2,i}$ is the population of the second level 22 (the fraction of ions in the second level 22) before the optical pulse, and $L$ is the length of the active fiber. This approximation is valid for a uniform distribution of the population of the second level 22 over the entire volume of the active fiber section 15.

Taking into account the radial dependence of the population of the second level 22 and the overlap of the signal mode with the active medium (as well as spontaneous luminescence), the change in signal power as it passes through the active fiber section 15 can be represented by

$$\frac{dP_s(\lambda_s)}{dz} = \sigma_a(\lambda_s)2\pi\int_S \left(\eta_s N_2(r)[P_s(\lambda_s) + 2P_0] - N_1(r)P_s(\lambda_s)\right)\overline{\psi_s}(r)\, r\, dr, \tag{7}$$

wherein $N_2(r) = \rho(r)_2$, $N_1 = \rho - N_2$, $P_0 = hv$ is the power of an imaginary noise photon at the amplifier input in the band $\delta v$, and $\overline{\psi_s}(r)$ is the normalized envelope of the signal mode. The gain corresponds to the ratio of the signal power at the output of the optical amplifier 14 to the power at the input, i.e., $G = P_{out}/P_{in}$.

The pump absorption coefficient corresponds to

$$A = \exp(\Gamma\sigma_a(v_p)\rho(1 - n_{2,i})L), \qquad (8)$$

wherein $\sigma_a(v_p)$ is the absorption cross section at the pumping frequency $v_p$. For predetermined cross sections, fiber section length $L$, and concentrations, the population of the second level 22 may determine the values of the gain $G$ and the pump absorption.

(c) Limiting the gain increase

The eavesdropper may carry out an attack via the optical amplifier by accessing the pumping device 16 and increasing the pumping power, thus increasing the gain and accordingly the signal power. The eavesdropper can then divert the resulting excess of the optical pulses, possibly without being noticed.

Standard amplifiers usually are configured to maximize the efficiency of converting pumping power to signal power. However, various factors limit this effectiveness, in particular the value of the pump absorption coefficient in the active fiber section 15. The concentration of active ions, the length of the active medium, and the overlapping factor value between the pump mode and the active medium mainly determine the value of the pump absorption coefficient. Therefore, the active fiber parameters may be determined for maximum pumping power absorption.

If the active fiber section 15 has a certain length and concentration of Erbium ions so that the resulting absorption coefficient is at 15 dB, then all ions in the active fiber section 15 can absorb this fraction of the pumping power (in case all active ions are in the ground state). For a "transparent" active fiber section 15, the number of Erbium ions in the ground state / first level 21 is about 50 %, corresponding to an absorption coefficient of one halve. In case 90 % of the Erbium ions have absorbed the pumping radiation 20 and passed to the third level 23 (and then relaxed to the second level 22), only 10 % of Erbium ions can absorb the pumping radiation 20. Thus, an absorption factor of 150 dB for a non-inverted fiber may be employed to obtain the same absorption efficiency for a 90 % inverted medium. This may be achieved at the expense of excess active fiber section length or excess concentration of (Erbium) ions in the active fiber section 15, wherein "excess" corresponds to additional absorption compared to the non-inverted case.

As long as there are enough ions to absorb the pump power effectively, the optical amplifier 14 remains in a state where the gain is sharply sensitive to changes in the pumping power. If in such a state the pumping power is increased by, e.g., 10%, the gain will increase by the same order of magnitude. In contrast, the optical amplifier 14 may be configured to be insensitive to an increase in the pump power. This may be achieved via a low pump absorption coefficient, i.e., when supplying pumping radiation 20 with a great amount of pumping power to the active fiber section, still only a small fraction is absorbed. In this case, the population inversion approaches 100 % (e.g., at 99%). Therefore, excessive pumping power provides a high level of population inversion at the cost of energy efficiency. Even when increasing the pumping power level arbitrarily, the population inversion may not be increased by more than, e.g., 1 %. Hence, the maximum gain increase will also not surpass 1 %. As a result, an optical amplifier 14 may be provided that is insensitive to an increase in pumping power.

Still, the optical amplifier 14 may resist an eavesdropper attack by increasing the pumping power only for optical pulses with relatively low intensity since high-intensity pulses or high-energy pulses may reduce the population inversion and return the optical amplifier 14 to the state of high sensitivity to increasing the pump power.

(d) High-energy pulses

The optical pulses may comprise a duration from 3 ns to 20 $\mu$s and a pulse peak power up to 200 mW, thus comprising a relatively high energy of up to 4 $\mu$J (e.g., for pulses for optical time domain reflectometry). These optical pulses are shorter in duration than the lifetime of the Erbium ions in the second level 22 / the relaxation time $\tau_{21} \approx 10$ ms of the Erbium ions in the active fiber section 15 (10 ms) to the first level 21. The energy in these optical pulses is high enough to substantially affect the population of the Erbium population levels during the transition of the pulse through the active fiber section 15. The optical pulses are too short and act on the population of the second level 22 differently than a continuous or quasi-continuous signal.

A high-energy pulse passing through the active medium can remove a significant part of the population inversion up to a degree when the active medium becomes transparent (i.e., when the gain is equal to 1). Thus, in case a high-energy pulse arrives and the energy stored in the active medium is insufficient, the active medium cannot amplify the high-energy pulse with the same gain as a low-energy pulse.

The high-energy pulse may further be distorted as it passes through the active medium. In particular, when the leading edge of the high-energy pulse is amplified by the active medium, the local population of the second level 22 is decreased, and a middle section of the high-energy pulse may be less amplified. Further, the tail of the high-energy pulse may merely pass the (then transparent) active medium and may not be amplified. The resulting distortion may lead to errors in processing of the optical pulses, particularly with regard to possible transmission line monitoring and optical time-domain reflectometry.

The pulse distortion can be quantified using a pulse shape metric such as $D_{\exp} = (\int_{t_1}^{t_2}(s_{\text{in}}(t) - s_{\text{out}}(t))^2$ d$t)^{1/2}$ or $s_{\text{in}}(t_1)/s_{\text{in}}(t_2) - s_{\text{out}}(t_1)/s_{\text{out}}(t_2)$, wherein $s_{\text{in}}(t)$ denotes a first form factor of an optical pulse before amplification, $s_{\text{out}}(t)$ denotes a second form factor of the optical pulse after amplification, and $t_1$ and $t_2$ denote the times of the beginning of the pulse and the end of the pulse respectively.

The energy stored in the inverted active medium can be approximated by

$$E = h v \pi a^2 L \rho (n_{2,i} - n_{2,f}),\qquad\qquad(9)$$

wherein $v$ denotes the frequency of the amplified signal, $\rho$ denotes the concentration of active ions (total amount of active ions per volume unit), $a$ denotes the radius of the active fiber section 15, $L$ denotes the active fiber section length, and $n_{2,f}$ denotes the population of the second level 22, which corresponds to being in a transparent state (when the gain is equal to one and when essentially equal amounts of active atoms are in the first state 21 and in the second level 22).

The population of the second level 22 before the passage of the pulse may be calculated as

$$n_{2,f} = \frac{R_{13}\tau + W_{12}\tau\left(1 + \frac{R_{13}}{A_{32}}\right)}{(1 + W_{21}\tau)\left(1 + \frac{R_{13} + R_{31}}{A_{32}}\right) + W_{12}\tau\left(1 + \frac{R_{31}}{A_{32}}\right) + R_{13}\tau},\qquad(10)$$

wherein $\tau$ is the lifetime of Erbium in the second level 22, $R_{13}$ is the pump absorption rate, $R_{31}$ is the rate of stimulated luminescence from the third level 23 to the first level 21, $A_{32}$ is the rate of non-radiative transition from the third level 23 to the second level 22, $W_{12}$ is the rate of forced signal absorption, and $W_{21}$ is the rate of stimulated signal emission (cf. E. Desurvire, Erbium-doped Fiber Amplifiers. Principle and Applications (2002)).

The population of the second level 22, corresponding to the transparent state of the active medium, can be approximated via the following equation:

$$G = \exp\left(\sigma_a(v_s)\rho\left((\eta_s + 1)n_{2,f} - 1\right)L\right) = 1$$
$$n_{2,f} = \frac{1}{1 + \eta_s}\qquad\qquad(11)$$

The optical amplifier may be configured using the parameters according to table 1.

**Table 1**

| Parameter | Variable | Value |
|---|---|---|
| Fiber radius, $\mu$m | $a$ | 2.2 |
| Numerical aperture | NA | 0.26 |
| Absorption cross section @$\lambda_S$, m$^2$ | $\sigma_a(v_s)$ | $4.15 \cdot 10^{-25}$ |
| Luminescence cross section @$\lambda_S$, m$^2$ | $\sigma_e(v_s)$ | $5.12 \cdot 10^{-25}$ |
| Absorption cross section @$\lambda_p$, m$^2$ | $\sigma_a(v_p)$ | $4.93 \cdot 10^{-25}$ |
| Luminescence cross section @$\lambda_p$, m$^2$ | $\sigma_e(v_p)$ | $1 \cdot 10^{-25}$ |
| Signal wavelength, nm | $\lambda_s$ | 1550 |
| Pump wavelength, nm | $\lambda_p$ | 980 |
| Working level lifetime, ms | $\tau$ | 10 |

(continued)

| Parameter | Variable | Value |
|---|---|---|
| Planck's constant, J s | $h$ | $6.62607015 \cdot 10^{-34}$ |
| Active ion concentration, m$^{-3}$ | $\rho$ | $1 \cdot 10^{25}$ |
| Mode spot size @$\lambda_S$, $\mu$m | $\omega_s$) | 1.69 |
| Mode spot size @$\lambda_p$, $\mu$m | $\omega_p$ | 1.42 |
| Pump power, mW | $P_p$ | 400 |
| Signal power, mW | $P_s$ | 1 |
| Active fiber section length, m | $L$ | 0.45 |

With $r = 0$ and $\psi_{p,s}(r) = 1$, the corresponding transition rate values are $W_{21} = 446.6$, $R_{31} = 31337.8$, $W_{12} = 361.7$, and $R_{13} = 154495.3$ [1/c]. The corresponding value of the energy stored in the active medium is $E = 4.8$ $\mu$J. In an optical pulse with a maximum peak power of 200 mW and a length of 20 $\mu$s, the energy is 4 $\mu$J. Hence, such an optical pulse will strongly influence the inversion. For long transmission lines 10, peak pulse durations can reach hundreds of microseconds with similar peak powers and even higher pulse energies.

The energy stored in the active fiber section 15 may generally be increased by increasing the active fiber section length. However, according to the proposed method, the active fiber section length is already determined with respect to the target maximum gain.

The energy stored in the active fiber section 15 can also be increased by increasing the size of the cross-sectional area of the fiber core of the active fiber section 15, in particular, its diameter. When increasing the cross-sectional area of the fiber core while keeping the pumping power level constant, the pumping power density will decrease proportionally. It is the pumping power density that determines the rate at which Erbium ions are transferred to the upper level. In order to reach the levels of inversion before increasing the cross-sectional area of the fiber core, the pumping power has to be increased accordingly. In this case, we automatically get the opportunity to amplify large input pulse energies, since we have stored more energy in the active medium.

(e) Optical amplification for quantum key distribution

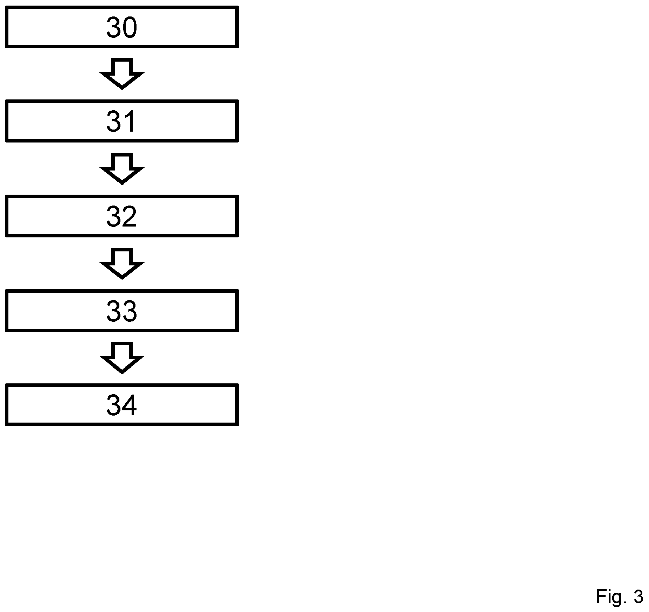

In Fig. 3, a graphical representation of the method for quantum key distribution based on the above-mentioned considerations is shown.

In an initial step 30, the transmission line 10 for transmitting optical pulses between the first data processing device 11 and the second data processing device 12 is provided and the optical amplifier 14 with the active fiber section 15 and the pumping device 16 is disposed on the transmission line 10.

In a first step 31, a target operating gain of the optical amplifier 14 is determined. The target operating gain may correspond to the signal decay along the transmission line 10. For example, if the photon number of the optical pulses drops by a factor of 10 after 50 km of the transmission line (transmission coefficient $T = 0.1$), the target operating gain for an optical amplifier at 50 km may be $G_{op} = 10$.

In a second step 32, a target maximum gain of the optical amplifier 14 is determined based on an optical signal leakage, e.g., a minimum detectable optical signal leakage

For example, for a determined maximum number of photons that may be diverted/leaked by the eavesdropper, a corresponding gain increment to the target operating gain can be determined and subsequently be added to the target operating gain, yielding the target maximum gain. In particular, from a maximum number of photons that may be diverted, a corresponding maximum divertable signal power may be determined (e.g., via $P_s = Nhv_s/t_s$). This maximum divertable signal power may correspond to the power that results from increasing the gain of the optical amplifier 14 above the target operating gain by the gain increment.

Further, the active fiber section length is adjusted such that an amplification beyond the target maximum gain is not possible by increasing the pumping power. The dependency/correspondence of gain and pumping power may, e.g., be determined by varying the pumping power and measuring the corresponding amplification of the optical pulses.

In a third step 33, a core cross-sectional area size of the active fiber section 15 is determined (e.g., via a core diameter of the active fiber section 15) based on a maximum allowable pulse shape distortion and a target maximum energy per pulse. To this end, a high-energy optical pulse with the target maximum energy per pulse is transmitted via the active fiber section, the pulse shape metric indicative of the pulse shape distortion of the high-energy optical pulse is determined, the pulse shape metric is compared with the maximum allowable pulse shape distortion, and the core cross-sectional area size is adjusted based on the comparison result.

In a fourth step 34, the operating pumping power of the pumping device 16 is determined such that the optical pulses are amplified with the target operating gain. Due to the determined target operating gain, the target maximum gain, and their corresponding pumping powers, no matter how much the eavesdropper with access to the pumping device 16 increases the pumping power beyond the operating pumping power, the proportion of the optical pulses that may be diverted is limited.

Subsequently, a shared key may be determined between the first data processing device 11 and the second data processing device 12 by quantum key distribution along the transmission line 10 during which optical pulses (emitted from the first or the second data processing device 11, 12) are amplified via the optical amplifier 14 by operating the pumping device 16 at the operating pumping power.

(f) Determining the shared key

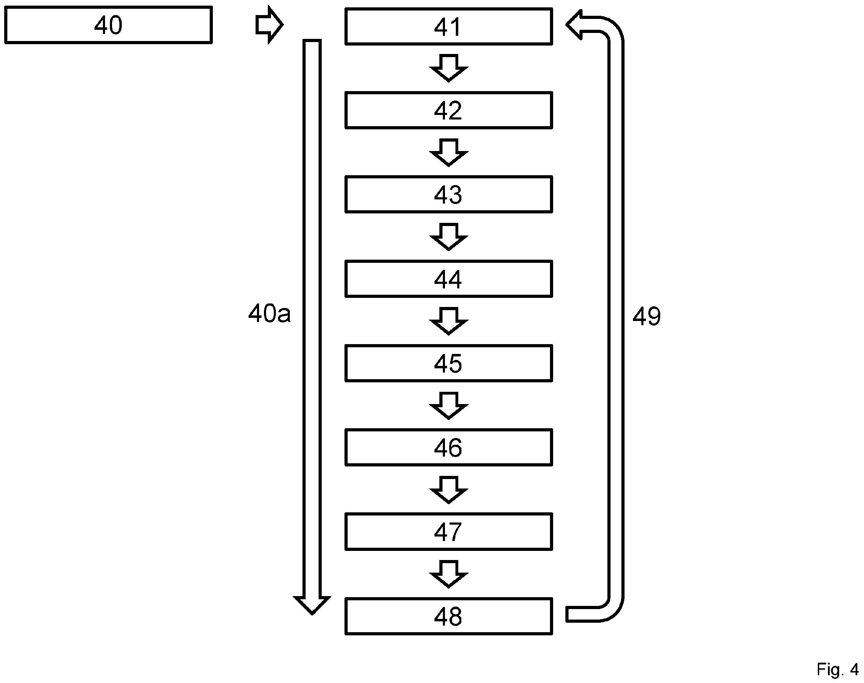

In Fig. 4, a graphical representation of further steps for determining a shared key by quantum key distribution corresponding to step 35 is shown. The first data processing device 11 and the second data processing device 12 are connected via an authenticated (public) classical channel and the optical fiber(s) of the transmission line 10 serve as a quantum channel.

In an initial step 40, an initial inner loss profile of the transmission line 10 (in particular its optical fiber segments) is determined, which essentially represents the natural signal losses in the transmission line 10. At this preliminary step, it should be ensured that no eavesdropper is accessing the transmission line 10. The initial loss profile may be shared between the first and the second data processing device 11, 12 via the authenticated classical communication channel.

In a first step 41, physical loss control of the transmission line 10 is carried out (e.g., by the first data processing device 11 and the second data processing device 12). In particular, an inner loss profile is determined and, preferably, shared between the first data processing device 11 and the second data processing device 12 via the classical channel.

By comparing the thus updated inner loss profile with the initial inner loss profile, a fraction $r_E$ of the signal possibly seized by the eavesdropper may be determined. For example, if the natural signal losses in a section of the transmission line 10 not comprising optical amplifiers 14 are represented by $r_0$ and the eavesdropper intercepts an intercepted fraction $r_E$ of the signal, then the intercepted fraction $r_E$ can be derived from total losses $r_t$ via the relation $(1 - r_t) = (1 - r_E)(1 - r_0)$.

In case the intercepted fraction $r_E$ grows too large, so that the legitimate users lose their informational advantage over the eavesdropper, the protocol is terminated. Termination of the protocol depends on the length of the transmission line 10 and the distance between two of the optical amplifiers 14. The protocol may in particular be terminated if an effective key rate is below a target key rate value.

In a second step 42, using a random number generator, a bit sequence of sequence length $l$ is determined in the first data processing device 11.

In a third step 43, the bit sequence is encoded into an optical signal comprising a series of $l$ key distribution pulses, which are transmitted to the second data processing device 12 via the transmission line 10. The signal bits 0 and 1 respectively correspond to coherent states $|\gamma_0\rangle$ and $|\gamma_1\rangle$. The particular way of encoding 0 and 1 signal bits into parameters of the coherent states $|\gamma_0\rangle$ and $|\gamma_1\rangle$ may vary. For example, the signal bits may be encoded into coherent light pulses with different intensities / photon numbers and same phases or, alternatively, into coherent light pulses with same intensities and different phases.

In a fourth step 44, the optical pulses are amplified by one or a plurality of optical amplifiers 14 provided along the transmission line 10.

In a fifth step 45, the optical signals are received and measured by the second data processing device 12. A corresponding received bit sequence is determined in the second data processing device 12.

In a sixth step 46, inconclusive signal bits, which correspond to quantum measurements in the second data processing device 12 determined as inconclusive, are discarded from the bit sequence in the first data processing device 11 and the received bit sequence in the second data processing device 12. To this end, bit positions of the inconclusive signal bits are transmitted via the classical channel from the second data processing device 12 to the first data processing device 11.

In a seventh step 47, by disclosing a part of the bit sequence and/or the received bit sequence via the classical channel, an error rate may be determined and error correction may be performed on the bit sequence and the received bit sequence by the first data processing device 11 and the second data processing device 12, respectively. The error correction may be carried out employing, e.g., low-density parity-check (LDPC) codes. As a result, an error corrected bit sequence is determined in the first data processing device 11 and the second data processing device 12.

In an eighth step 48, an amplified key sequence is determined from the error corrected bit sequence using privacy amplification. The amplified key sequence is shorter than the error corrected bit sequence and any potential eavesdropper has none or negligibly small information on the amplified key sequence. The amplified key sequence represents a shared key sequence between the first data processing device 11 and the second data processing device 12 as a result of quantum key distribution.

The steps from the first step 41 to the eighth step 48 may be repeated (arrow 49) and the amplified key sequences concatenated to a (total) shared key until a total length of the shared key is as large as required by the application at hand.

During all steps 41 to 48, the transmission line 10 may be continuously controlled (arrow 40a). Hence, a signal loss profile is determined and, preferably, shared between the first data processing device 11 and the second data processing device 12 via the classical channel. In case where the integrity of the transmission line 10 is compromised to the extent of a considerable risk that the eavesdropper would decipher the scattering losses, the protocol may be terminated.

(g) Transmission line control

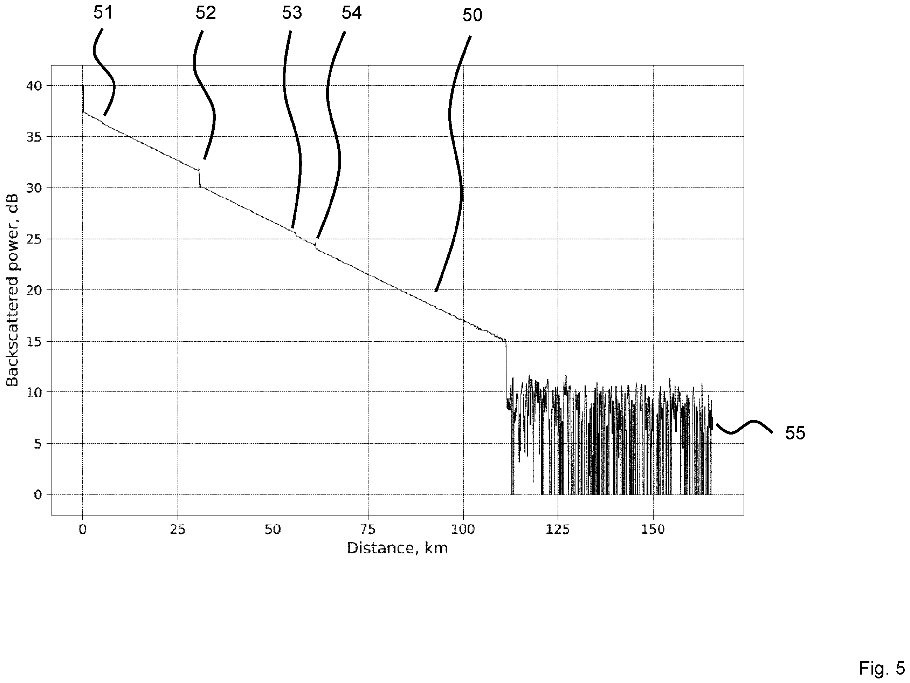

Fig. 5 shows an exemplary reflectogram resulting from optical time-domain reflectometry corresponding to a signal loss profile. The reflectogram shows the logarithmic power of backscattered optical signals (in particular of high-intensity optical test pulses) as a function of distance between a reflectometer and a corresponding discontinuity. The reflectometer may be arranged within or close to the first data processing device 11 and/or the second data processing device 12.

Natural signal losses along the transmission line 10 are due to homogenous scattering and result in an exponential decay of power corresponding to linear regions 50. Reflectogram features 51 to 54 comprise deviations from the exponential decay of the reflectogram curve, in particular sharp peaks and/or drops in the reflectogram curve allow for classifying the signal losses at the corresponding position of the transmission line 10. This is especially useful at the initial step 40 for determining the shared key, where identifying and mitigating local losses is important for comparison with determined losses during key exchange.

The reflectogram features 51 to 54 generally correspond to imperfections of the transmission line 10 and may, e.g., represent low-quality splices, bends, or different connectors. Scattering losses from such regions are localized with respect to the transmission line 10. Peaks in the reflectogram features 51 to 54 may result from an excessive scattering which in the case of physical connectors are due to the test pulses undergoing Fresnel reflection. Noisy region 55 at the right-hand side of the reflectogram represents the end of the backscattered signal.

Additionally or alternatively, the transmission line control may comprise determining and analyzing of intensities of the test pulses transmitted by the first data processing device 11 and received by the second data processing device 12 for classifying the signal losses at respective positions of the transmission line 10.

The features disclosed in this specification, the figures and/or the claims may be material for the realization of various embodiments, taken in isolation or in various combinations thereof.

**Claims**

1. A method for optical signal amplification, the method being implementable in a system which comprises:

   - a transmission line (10) for transmitting optical signals between a first data processing device (11) and a second data processing device (12); and
   - an optical amplifier (14) disposed at the transmission line (10), the optical amplifier (14) comprising an active fiber section (15) and a pumping device (16);

   the method comprising:

   - determining a target operating gain of the optical amplifier (14);
   - determining a target maximum gain of the optical amplifier (14);
   - determining an active fiber section length such that the optical signals are amplified with at most the target maximum gain;
   - determining a core cross-sectional area size of the active fiber section (15) based on a maximum allowable pulse shape distortion and a target maximum energy per pulse such that high-energy pulses with the target maximum energy per pulse are distorted by at most the maximum allowable pulse shape distortion; and
   - determining an operating pumping power of the pumping device (16) below the maximum pumping power such that the optical signals are amplified with the target operating gain.

2. The method according to claim 1, further comprising:

   - determining a shared key between the first data processing device (10) and the second data processing device (11) by quantum key distribution comprising amplifying the optical signals via the optical amplifier (14) by operating the pumping device (16) at the operating pumping power.

3. The method according to claim 1 or 2, wherein the target maximum gain is determined from the target operating gain and a gain increase value determined from an optical signal leakage, preferably from a minimum detectable optical signal leakage.

4. The method of claim 3, wherein the optical signal leakage is determined via the transmission line (10).

5. The method according to at least one of the preceding claims, wherein determining the core cross-sectional area size of the active fiber section (15) comprises determining at least one of a core diameter, a core radius, and a core circumference of the active fiber section (15).

6. The method according to at least one of the preceding claims, wherein the determining of the core cross-sectional area size of the active fiber section (15) comprises

   - transmitting the high-energy pulses with the target maximum energy per pulse via the active fiber section (15);
   - determining a pulse shape metric indicative of a pulse shape distortion of the high-energy pulses,
   - comparing the pulse shape metric value with the maximum allowable pulse shape distortion, and
   - adjusting the core cross-sectional area size based on the comparison result.

7. The method of claim 6, wherein the determining of the pulse shape metric may comprise determining a first form factor of an optical pulse before amplification and a second form factor of the optical pulse after amplification.

8. The method according to at least one of the preceding claims, further comprising determining optical signal losses along the transmission line (10), preferably optical signal losses depending on a position along the transmission line (10).

9. The method according to at least one of the preceding claims, wherein the optical signals comprise test pulses for determining the optical signal losses and key distribution pulses for determining the shared key, wherein the test pulses comprise a higher energy per pulse than the key distribution pulses.

10. The method according to at least one of the preceding claims, further comprising providing the transmission line (10) with a physically unclonable structure.

11. The method according to at least one of the preceding claims, further comprising providing the active fiber section (15) with at least one of an Erbium-doped fiber section, a thulium-doped fiber section, a neodymium-doped fiber section, and an ytterbium-doped fiber section.

12. The method according to at least one of the preceding claims, further comprising providing the transmission line (10) free of an optical isolator and free of a tap coupler.

13. The method according to at least one of the preceding claims, further comprising providing the optical amplifier (14) as a bidirectional optical amplifier.

14. The method according to at least one of the preceding claims, further comprising disposing a plurality of optical amplifiers (14) at the transmission line (12), each comprising a further pumping device (16) and a further active fiber section (15) having the active fiber section length, wherein determining the shared key comprises amplifying the optical signals via the plurality of optical amplifiers (14) by operating each further pumping device (16) at the operating pumping power.

15. The method according to at least one of the preceding claims, wherein a pumping wavelength of pumping radiation emitted from the pumping device (16) is adjusted to be less than 10 nm apart from a peak wavelength of the absorption spectrum of the active fiber section (15).

16. The method of claim 15, wherein the pumping wavelength of the pumping radiation emitted from the pumping device (16) is stabilized by controlling temperature and/or electric power supply of the pumping device (16).

17. A system for optical signal amplification, comprising a transmission line (10) for transmitting optical signals between a first data processing device (11) and a second data processing device (12), the system further comprising an optical amplifier (14) disposed at the transmission line (10) with an active fiber section (15) and a pumping device (16), the system having been configured according to the method of at least one of the preceding claims.

Fig. 1

Fig. 2

Fig. 3

Fig. 4

Fig. 5

**EUROPEAN SEARCH REPORT**

Application Number

EP 23 16 5719

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SUPRADEEPA V R ET AL: "Raman fiber lasers", JOURNAL OF OPTICS, INSTITUTE OF PHYSICS PUBLISHING, BRISTOL GB, vol. 19, no. 2, 4 January 2017 (2017-01-04), page 23001, XP020313014, ISSN: 2040-8986, DOI: 10.1088/2040-8986/19/2/023001 [retrieved on 2017-01-04] | 1-9, 11-17 | INV.<br>H04L9/08<br>H04B10/2507<br>H04B10/25<br>H04B10/29 |
| Y | * sections 3.2.1, 7.2 and 7.3.1 * ----- | 10 | |
| Y,P | MIKHAIL YAROVIKOV ET AL: "Optical fiber-based key for remote authentication of users and optical fiber line", ARXIV.ORG, CORNELL UNIVERSITY LIBRARY, 201 OLIN LIBRARY CORNELL UNIVERSITY ITHACA, NY 14853, 4 January 2023 (2023-01-04), XP091408060, * abstract * ----- | 10 | |
| X | HORIGUCHI M ET AL: "ERBIUM-DOPED OPTICAL FIBER AMPLIFIERS PUMPED IN THE 600- AND 820-NMBANDS", JOURNAL OF LIGHTWAVE TECHNOLOGY, IEEE, USA, vol. 12, no. 5, 1 May 1994 (1994-05-01), pages 810-820, XP000480106, ISSN: 0733-8724, DOI: 10.1109/50.293973 * section III; figures 3-5 * ----- | 1,17 | TECHNICAL FIELDS SEARCHED (IPC)<br><br>H04L<br>H04B |

-/--

The present search report has been drawn up for all claims

| Place of search | Date of completion of the search | Examiner |
|---|---|---|
| Munich | 8 September 2023 | Manet, Pascal |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

**EP 23 16 5719**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JING H ET AL: "The amplified model of erbium-doped fiber amplifier (EDFA) with cross-phase modulation (XPM)", OPTICS COMMUNICATIONS, ELSEVIER, AMSTERDAM, NL, vol. 220, no. 4-6, 15 May 2003 (2003-05-15), pages 433-438, XP004424949, ISSN: 0030-4018, DOI: 10.1016/S0030-4018(03)01370-1 * section 3; figures 2, 3 * | 1,17 | |
| X | EP 1 075 095 A2 (NORTEL NETWORKS LTD [CA]) 7 February 2001 (2001-02-07) * paragraphs [0023] - [0027]; figures 1A, 1B * | 1,17 | |

TECHNICAL FIELDS
SEARCHED (IPC)

The present search report has been drawn up for all claims

| Place of search | Date of completion of the search | Examiner |
|---|---|---|
| Munich | 8 September 2023 | Manet, Pascal |

EPO FORM 1503 03.82 (P04C01)

## ANNEX TO THE EUROPEAN SEARCH REPORT
## ON EUROPEAN PATENT APPLICATION NO.

EP 23 16 5719

This annex lists the patent family members relating to the patent documents cited in the above-mentioned European search report.
The members are as contained in the European Patent Office EDP file on
The European Patent Office is in no way liable for these particulars which are merely given for the purpose of information.

08-09-2023

| Patent document cited in search report | | Publication date | Patent family member(s) | | Publication date |
|---|---|---|---|---|---|
| EP 1075095 | A2 | 07-02-2001 | CA | 2279645 A1 | 04-02-2001 |
| | | | EP | 1075095 A2 | 07-02-2001 |
| | | | JP | 2001053681 A | 23-02-2001 |
| | | | US | 6304370 B1 | 16-10-2001 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2015043056 A1
- US 11417998 B2
- EP 2535989 A2
- CN 115189212 A
- US 2003197921 A1

**Non-patent literature cited in the description**

- **E. DESURVIRE.** *Erbium-doped Fiber Amplifiers. Principle and Applications,* 2002